# EUROPEAN PATENT APPLICATION

(11) **EP 4 459 595 A1**
(43) Date of publication of application: **06.11.2024**
(21) Application number: 21969895.8
(22) Date of filing: 27.12.2021
(51) Int. Cl.: G08G 5/00

(54) **INFORMATION PROCESSING DEVICE, INFORMATION PROCESSING METHOD, AND PROGRAM**

(71) Applicant: Nabla Mobility Inc., Tokyo 1020072 (JP)
(72) Inventor: TANAKA, Shinji, Tokyo 102-0072 (JP); SATO, Makoto, Tokyo 102-0072 (JP)
(74) Representative: Betten & Resch
(86) International application number: PCT/JP2021/048558
(87) International publication number: WO 2023/127011

(57) **Abstract**

There is a demand for flying aircraft more efficiently. The information processing device 100 comprising an own aircraft information acquisition unit 141 that acquires condition information regarding the condition of the target aircraft, an other aircraft information acquisition unit 143 that acquires other aircraft information regarding other aircraft different from the target aircraft, a path information acquisition unit 151 that acquires information regarding the path of the target aircraft that meets specified conditions based on the condition information and the other aircraft information, and an output unit 161 that outputs output information based on the information acquired by the path information acquisition unit 151, is capable of outputting information useful for efficiently flying aircraft.

## Description

### [Technical Field]

The present invention relates to an information processing device, an information processing method, and a program for outputting information regarding the paths on which aircraft fly.

### [Background Art]

In aircraft operations, the path an aircraft flies is determined based on restrictions such as those regarding other aircraft and regulations.

Regarding such aircraft flight, Patent Document 1 describes flying with an altitude profile according to the aircraft's performance envelope under statutory flight level constraints.

Patent Document 2 describes generating multiple flight paths in a local area near an airport that do not interfere with other aircraft, allowing pilots to select a flight path considering fuel efficiency, speed, and other operational considerations.

Patent Document 3 describes a system configuration for optimizing flight parameters and fuel consumption for flight stage segments.

Patent Documents 4 and 5 describe outputting weather forecasts using machine learning based on measurement data.

### [Prior Art Documents]

### [Patent Documents]

[Patent Document 1] Japanese Unexamined Patent Application Publication No. 2013-173522
[Patent Document 2] U.S. Patent Application Publication No. 2017/0018196
[Patent Document 3] International Publication No. 2015/155202
[Patent Document 4] U.S. Patent Application Publication No. 2017/0299772
[Patent Document 5] International Publication No. 2019/244168

### [Summary of Invention]

### [Problems to Solve]

In the field of aircraft operation management, there is a demand to fly aircraft more efficiently than before.

The present invention aims to provide an information processing device capable of outputting useful information for efficiently flying aircraft.

### [Means for Solving Problem]

The first invention is an information processing device comprising: an own aircraft information acquisition unit that acquires condition information regarding the condition of the target aircraft; an other aircraft information acquisition unit that acquires other aircraft information regarding other aircraft different from the target aircraft; a path information acquisition unit that acquires information regarding the path of the target aircraft that meets specified conditions based on the condition information and the other aircraft information; and an output unit that outputs output information based on the information acquired by the path information acquisition unit.

This configuration enables for outputting useful information for efficiently flying aircraft.

The second invention, in accordance with the first invention, is an information processing device wherein, the other aircraft information comprises information acquired by other aircraft regarding the flight of aircraft during the flight of other aircraft.

This configuration enables for outputting further useful information for efficiently flying aircraft.

The third invention, in accordance with the second invention, is an information processing device further comprising: a weather information acquisition unit that acquires weather information comprising information on the atmospheric condition regarding the airspace in which the target aircraft flies based on forecast information of the atmospheric condition and information acquired by other aircraft regarding the airspace, wherein the path information acquisition unit acquires information regarding the path of the target aircraft that meets specified conditions based on the weather information.

This configuration enables for outputting further useful information for efficiently flying aircraft.

The fourth invention, in accordance with the first or second invention, is an information processing device further comprising a weather information acquisition unit that acquires weather information comprising information on the atmospheric condition, wherein the path information acquisition unit acquires information regarding the path of the target aircraft that meets specified conditions based on the weather information.

This configuration enables for outputting further useful information for efficiently flying aircraft.

The fifth invention, in accordance with the fourth invention, is an information processing device, wherein the weather information acquisition unit acquires weather information at different altitudes in the airspace regarding the path of the target aircraft.

This configuration enables for outputting further useful information for efficiently flying aircraft.

The sixth invention, in accordance with the first to fifth inventions, is an information processing device, wherein the specified conditions comprise conditions regarding fuel consumption of the target aircraft or conditions regarding costs associated with the target aircraft.

This configuration enables for outputting information in accordance with the impact on fuel consumption or costs associated with the target aircraft.

The seventh invention, in accordance with any of the first to sixth inventions, is an information processing device, wherein the specified conditions at least comprise either i) conditions regarding fuel consumption of one or more specified related aircraft different from the target aircraft or ii) conditions regarding costs associated with related aircraft.

This configuration enables for outputting information according to the impact on fuel consumption or costs associated with the related aircraft.

The eighth invention, in accordance with any of the first to seventh inventions, is an information processing device further comprising an airspace information acquisition unit that acquires airspace information comprising information regarding the airspace in which aircraft can fly, wherein the path information acquisition unit acquires information regarding the path of the target aircraft using the airspace information.

This configuration enables for outputting information according to the airspace in which aircraft can fly.

The ninth invention, in accordance with any of the first to eighth inventions, is an information processing device, wherein the other aircraft information comprises information regarding the position of each of one or more other aircraft after a specified time has elapsed and the other aircraft information acquisition unit acquires information regarding the position of each of one or more other aircraft after a specified time has elapsed based on information regarding the position of each of the other aircraft.

This configuration enables for outputting further useful information for efficiently flying aircraft.

The tenth invention, in accordance with any of the first to ninth inventions, is an information processing device, wherein the own aircraft information acquisition unit acquires condition information using at least one of scheduled information regarding the flight plan of the target aircraft, aircraft characteristics information indicating characteristics regarding the equipment of the target aircraft, and operation history information regarding the operation history of the target aircraft.

This configuration enables for outputting further useful information for efficiently flying aircraft based on the condition information of the target aircraft.

The eleventh invention, in accordance with any of the first to tenth inventions, is an information processing device, wherein the path information acquisition unit acquires information regarding the path of the target aircraft each time specified acquisition conditions are met.

This configuration enables for outputting useful information at any time.

The twelfth invention, in accordance with any of the first to eleventh inventions, is an information processing device, wherein the output unit outputs output information based on the information acquired by the path information acquisition unit each time specified output conditions are met during the flight of the target aircraft.

This configuration makes enables for outputting useful information at any time during the flight of the target aircraft.

The thirteenth invention, in accordance with any of the first to twelfth inventions, is an information processing device, wherein the output unit outputs the output information in a specified notification mode different from the output mode of when the notification conditions are not met, when specified notification conditions regarding the information acquired by the path information acquisition unit are met.

This configuration enables for outputting useful information for efficiently flying aircraft.

The fourteenth invention, in accordance with any of the first to thirteenth inventions, is an information processing device, wherein the specified conditions comprise conditions regarding scores and the path information acquisition unit acquires information regarding one or more paths based on the scores corresponding to each of the two or more candidate paths using condition information and other aircraft information.

This configuration enables for outputting useful information for efficiently flying aircraft based on the scores of two or more paths.

The fifteenth invention, in accordance with any of the first to fourteenth inventions, is an information processing device, wherein the path information acquisition unit acquires recommended path information regarding the path of the target aircraft concerning course, altitude, or speed as path information of the target aircraft.

This configuration enables for outputting useful information for efficiently flying aircraft.

The sixteenth invention, in accordance with the fifteenth invention, is an information processing device further comprising a result information acquisition unit that acquires information regarding the operation results of the target aircraft based on the output information when output information based on the recommended path information is output, wherein the path information acquisition unit acquires information regarding the path of the target aircraft using the information acquired by the result information acquisition unit.

This configuration enables for outputting more useful information by feeding back the operation results based on the output information.

The seventeenth invention, in accordance with the fifteenth or sixteenth invention, is an information processing device, wherein the output unit outputs flight setting information used for instrument flight of the target aircraft based on the recommended path information.

This configuration enables for easily using the output information for efficiently flying the target aircraft.

The eighteenth invention, in accordance with any of the first to seventeenth inventions, is an information processing device wherein the output unit outputs the output information to a terminal device used by a user on the ground or an electronic flight bag used by the pilot of the target aircraft.

This configuration enables the user on the ground or the pilot to easily confirm the content of the output information.

The nineteenth invention, in accordance with any of the first to eighteenth inventions, is an information processing device, wherein the information regarding the path comprises at least one of a climb profile and a descent profile that the target aircraft is recommended to pass.

This configuration enables for outputting useful information for efficiently flying aircraft in the context of continuous climb operation or continuous descent operation.

Twentieth invention, in accordance with the nineteenth invention, is an information processing device, wherein the information regarding the path comprises target altitude information regarding the altitude of two or more points in the climb profile or descent profile.

This configuration easily enables for efficiently flying the aircraft in the context of continuous climb operation or continuous descent operation.

### [Effect of Invention]

The information processing device of the present invention enables for outputting useful information for efficiently flying aircraft.

### [Brief Description of Drawings]

[FIG. 1] Diagram showing the schematic configuration of an operation support system using the information processing device according to the embodiment.
[FIG. 2] Block diagram of the information processing device in the embodiment.
[FIG. 3] Diagram explaining a specific example of fuel consumption information acquisition in the information processing device.
[FIG. 4] Diagram explaining a specific example of position prediction information acquisition in the information processing device.
[FIG. 5] Diagram explaining a specific example of atmospheric prediction information acquisition in the information processing device.
[FIG. 6] Flowchart explaining the operation flow of the information processing device.
[FIG. 7] Flowchart explaining the recommended path information acquisition process of the information processing device.
[FIG. 8] Diagram explaining a specific example of the operation of the path information acquisition unit when setting altitude in the information processing device.
[FIG. 9] Flowchart explaining an example of using the altitude setting support function in the information processing device.
[FIG. 10] Diagram explaining a specific example of the operation of the path information acquisition unit during CCO or CDO in the information processing device.
[FIG. 11] Flowchart explaining an example of using the continuous climb or continuous descent setting support function in the information processing device.
[FIG. 12] Diagram explaining a specific example of the operation of the path information acquisition unit when setting a shortcut path in the information processing device.
[FIG. 13] Flowchart explaining an example of using the shortcut path setting support function in the information processing device.
[FIG. 14] Overview diagram of the computer system in the embodiment.
[FIG. 15] Block diagram of the computer system.

### [Embodiments]

Hereinafter, embodiments of the information processing device, etc. will be described with reference to the drawings. Note that elements marked with the same symbols in the embodiments perform the same operations, and repetitive explanations may be omitted.

The terms used below are generally defined as follows. These terms should not always be interpreted as described here; they should also consider explanations given individually below.

An identifier refers to a character or code that uniquely indicates a certain item. The identifier may be an ID or any information that can identify the corresponding item. That is, an identifier may be the name of the item itself it indicates or a combination of codes that uniquely correspond to it.

The path of an aircraft means an airway, but it can also be understood as the process of flying an aircraft. Information regarding the path may comprise not only information specifying the points and airways the aircraft should pass through but also information indicating the speed and attitude of the aircraft. Here, a point means a position specified by information such as latitude and longitude either absolutely or relatively, or it can be a position specified by a specified waypoint. Information indicating the points and airways may or may not comprise information regarding altitude.

Information regarding the position of the aircraft means a point specified by the coordinate information of latitude and longitude and altitude. It may also be information specified only by the coordinate information. It can be information specifying an area or airspace with a specified range. It can also be information indicating the relative position to a specific point.

Acquisition comprises obtaining items entered by the user and acquiring information stored in the device itself or other devices (whether the information is pre-stored or generated through information processing in the device). Acquiring information stored in other devices comprises obtaining information stored in other devices via API, and it comprises acquiring the contents of document files provided by other devices (such as web pages). It can also comprise acquiring information in a different format from the original information through optical character recognition on image files.

The acquisition of information can use so-called machine learning techniques. Machine learning techniques can be utilized as follows. That is, a learning device that uses specific types of input information as input and the type of output information to be acquired as output is constructed using machine learning techniques. By preparing a set of input and output information in advance and providing the two or more sets of information to a module for constructing a learning device, the learning device can be constructed and stored in the storage unit. The learning device can also be called a classifier. Machine learning techniques are not limited to deep learning, random forests, SVM, etc. Machine learning can use various existing libraries and functions in machine learning frameworks such as scikit-leam, TensorFlow, PyTorch. Acquiring information using such a learning device is sometimes called machine learning-based acquisition.

The learning device is not limited to those obtained by machine learning. The learning device can also be a table showing the correspondence between input vectors based on input information and output information. In this case, it can acquire output information corresponding to the feature vector based on the input information from the table, or it can generate a vector approximating the feature vector based on the input information using the input vectors and parameters such as weights in the table, and then acquire the final output information using the corresponding output information and parameters of each input vector used for generation. Acquiring information using such a learning device can be referred to as acquisition using correspondence relationships. The learning device can also be a function that represents the relationship between input vectors based on input information and information for generating output information. In this case, information corresponding to the feature vector based on the input information can be obtained using the function, and the output information can be acquired using the obtained information. Acquiring information using such a learning device can be referred to as acquisition using a function.

In the following description, the output information of such a learning device (learning information) can be referred to as acquired information.

Outputting information comprises displaying on a display, projecting using a projector, printing with a printer, outputting sound, transmitting to external devices, storing in recording media, and passing processing results to other processing devices or programs. It comprises enabling for displaying the information on a web page, sending it as an email, or outputting information for printing.

Receiving information comprises accepting information entered from input devices such as keyboards, mice, and touch panels, receiving information transmitted through wired or wireless communication lines from other devices, and accepting information read from recording media such as optical disks, magnetic disks, and semiconductor memory.

Updating various types of information stored in the information processing device comprises changing the stored information, adding new information to the stored information, and deleting some or all of the stored information.

### (Embodiments)

In this embodiment, the information processing device acquires path prediction information for other aircraft and condition information for the target aircraft, respectively. Then, it acquires information regarding the path of the target aircraft that meets specified conditions based on the acquired information and outputs output information based on the path information. It can also acquire weather information and use it to obtain path information for the target aircraft. Below, an operation support system for aircraft using such an information processing device is explained.

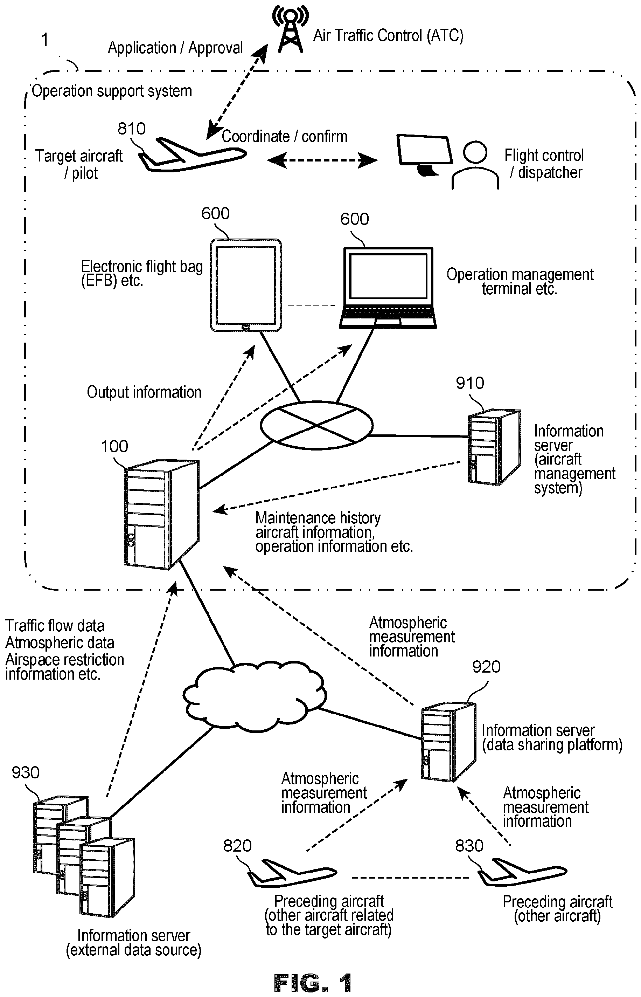

FIG. 1 shows the schematic configuration of an operation support system 1 using the information processing device 100 according to this embodiment.

As shown in FIG. 1, the operation support system 1 comprises the information processing device 100 and a terminal device 600. In this embodiment, the operation support system 1 is used together with internal and external information servers 910, 920, 930, etc. of the operation support system 1. The operation support system 1 is broadly configured to output the output information regarding the target aircraft 810 from the information processing device 100 to a specified terminal device 600, etc. The pilot of the target aircraft 810 or the dispatcher managing the operation can use the output information to operate the target aircraft 810.

In this embodiment, the operation support system 1 can be used by organizations such as airlines that operate one or more aircraft. The operation support system 1 can also be used jointly by multiple organizations.

The operation support system 1 relates not only to the target aircraft 810 but also to other aircraft 820 and 830 different from the target aircraft 810. The target aircraft 810 refers to an aircraft that is the subject of various information acquisition processes performed by the information processing device 100 described below. The other aircraft different from the target aircraft also comprise the related aircraft 820 and the other aircraft 830 different from the related aircraft 820. The related aircraft 820 is, an aircraft that is associated with the organization operating the operation support system 1. The related aircraft 820 may be referred to as an aircraft that is subject to an efficient operation using the operation support system 1. That is, in a case where the operation support system 1 is used for an airline, the related aircraft 820 may comprise aircraft used for the operation of the airline, just like the target aircraft 810. Here, an airline means a single corporate organization, an airline group including multiple corporate organizations, or a company that has a partnership with the airline group. Accordingly, the related aircraft 820 may comprise aircraft of the same company operating the target aircraft 810, other aircraft of a company that forms the same group, or aircraft of a partner company.

In the operation support system 1, the information processing device 100 can communicate with the terminal device 600 and devices such as the internal information server 910 of the organization via a network such as a LAN. The network is not limited thereto, and it can also be the Internet or other communication networks. The information processing device 100 can communicate with external information servers 920, 930 via the Internet, etc. The connection and communication methods between the information processing device 100 and the terminal device 600 or between the information processing device 100 and the information servers 910, 920, 930, etc. are not limited thereto.

The terminal device 600 in this embodiment can be a device that serves as the output destination of the output information from the information processing device 100. In this embodiment, an electronic flight bag (EFB) used in the operation of the target aircraft 810 can serve as the terminal device 600. Further, a terminal device such as an operation management terminal used by operation managers during the operation of the target aircraft 810 can serve as the terminal device 600. Other devices can also be used as the terminal device 600. If there is an electronic computer on the target aircraft 810 that can communicate with the information processing device 100 via a network, the target aircraft 810 itself can be considered as the terminal device 600. The configuration may be such that the output information is directly output to the devices connected to the information processing device 100 without using the terminal device 600.

Various devices can be used as electronic computers for the terminal device 600, such as personal computers, so-called smartphones, tablet-type information terminal devices, and so on. In the following examples, it may be assumed that a personal computer with a keyboard and display is used as the electronic computer for the terminal device 600, but this is not limited thereto.

The information server 910 is a server device that stores information regarding the aircraft management system. The information server 910 can be used to manage information regarding one or more aircraft used within the organization using the operation support system 1. For example, the information server 910 can store maintenance records, aircraft information, operation history, etc., of each aircraft. The information for each aircraft is stored in association with an identifier that identifies the corresponding aircraft, but this is not limited thereto. The information server 910 is configured to send the stored information to the information processing device 100 when a specified inquiry or access is made from the information processing device 100.

The information server 920 is a server device that stores information regarding the data supply platform for weather information. In this embodiment, the information server 920 stores atmospheric measurement information regarding the atmospheric condition measured by aircraft in flight. The atmospheric measurement information is stored in association with information such as position (coordinates of latitude, longitude, etc.), altitude, and measured time intervals (time points). The atmospheric measurement information comprises one or more measured values of wind speed, wind direction, static temperature, total temperature, and static pressure. Other information may also be comprised in the atmospheric measurement information.

The information server 920 accumulates atmospheric measurement information measured by the related aircraft 820. When the target aircraft 810 flies, the information server 920 also stores atmospheric measurement information measured by the target aircraft 810. The information server 920 stores atmospheric measurement information measured by other aircraft 830. The timing of storing atmospheric measurement information is not limited. In this embodiment, atmospheric measurement information is configured to be transmitted from the aircraft and stored in the information server 920 immediately after being measured. The atmospheric measurement information is measured by avionics installed in each aircraft. Such stored atmospheric measurement information can represent a high-precision, real-time high-altitude wind distribution. The information server 920 may process the information to anonymize it, so that information directly indicating which aircraft measured the data is not comprised. The information server 920 is configured to send the stored atmospheric measurement information to the information processing device 100 when a specified inquiry or access is made from the information processing device 100. The atmospheric measurement information measured by other aircraft 820 and 830 is referred to as other aircraft measurement information. The other aircraft measurement information is information acquired by other aircraft regarding the flight of those aircraft measured by other aircraft 820 and 830 during their flight.

The information server 930 is configured to send the stored information to the information processing device 100 when a specified inquiry or access is made from the information processing device 100.

One of the information servers 930 stores information indicating past or current traffic flow (hereinafter simply referred to as traffic flow). The traffic flow can be considered the historical position information of aircraft fleet. The information server 930 stores information such as the longitude, latitude, and altitude of each aircraft, associated with the date and time and identifiers that can identify the aircraft. By storing information regarding each aircraft during operation, the information server 930 can provide information regarding aircraft fleet present in a specified airspace. Such an information server 930 can be configured to store information regarding the current or past flight status output from each aircraft based on standards such as ADS-B (Automatic Dependent Surveillance-Broadcast). The information server 930 can also store information regarding the operational status of actuators used in the flight of each aircraft and information obtained by avionics such as turbulence and acceleration associated with the position information of each aircraft. In other words, the information server 930 stores condition information regarding the status of each aircraft in the past or present. Among such condition information of each aircraft, the condition information regarding the flight of those aircraft measured by other aircraft 820 and 830 during their flight can be referred to as other aircraft condition information. It is information acquired by other aircraft.

One of the information servers 930 stores forecast information regarding the atmospheric condition published by public institutions or other organizations (hereinafter referred to as weather forecast information). The information server 930 stores weather forecast information comprising atmospheric data such as pressure, temperature, wind speed, and turbulence intensity, associated with time, latitude, longitude, altitude, and other information. Weather forecasts by organizations such as the Japan Meteorological Agency or NOAA (National Oceanic and Atmospheric Administration) can be used as data sources.

One of the information servers 930 may comprise airspace restriction information. Airspace restriction information is information regarding airspace where aircraft can fly, including information indicating airspace where flight is permitted, airspace where flight is prohibited, and information specifying flight restrictions. In this embodiment, the airspace restriction information comprises information regarding altitude restrictions at each airport and information regarding final approach fixes (FAFs), associated with identifiers specifying standard instrument departure procedures (SIDs) or standard terminal arrival paths (STARs) at each airport.

Various devices can be used as electronic computers for the information servers 910, 920, and 930, such as personal computers, server devices, so-called smartphones, tablet-type information terminal devices, and so on. Each of the information servers 910, 920, and 930 can be configured by a single device, multiple devices operating in cooperation, or electronic computers embedded in other equipment. The servers can be cloud servers, ASP servers, etc., and their types are not limited.

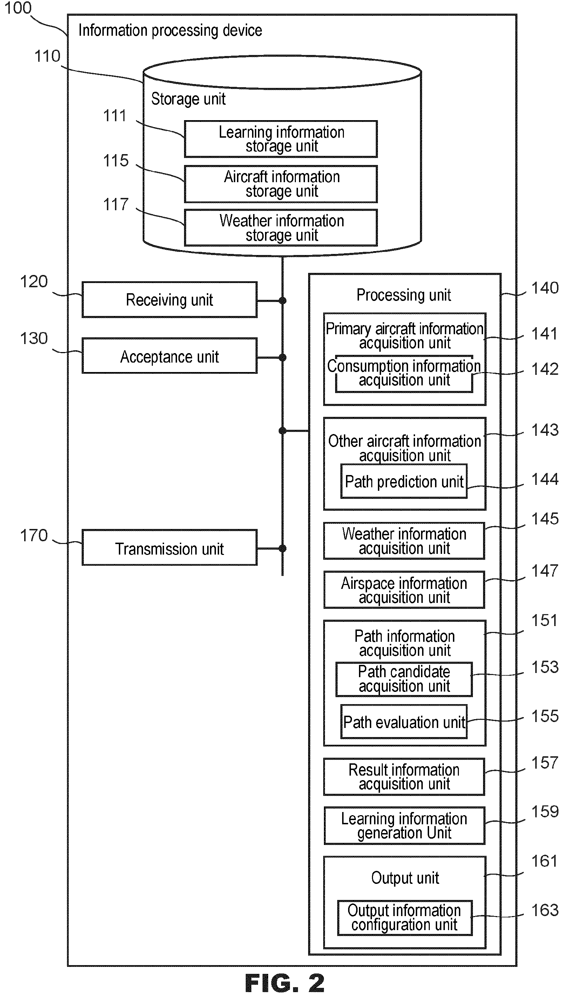

FIG. 2 is a block diagram of the information processing device 1 in this embodiment.

The information processing device 100 comprises a storage unit 110, a receiving unit 120, an acceptance unit 130, a processing unit 140, and a transmitting unit 170. The information processing device 100 is, a server device.

The storage unit 110 comprises a learning information storage unit 111, an aircraft information storage unit 115, and a weather information storage unit 117.

The storage unit 110 is preferably a non-volatile storage medium, but it can also be realized with a volatile storage medium. The storage unit 110 stores information obtained by the receiving unit 120 and processing unit 140, among other things. The process of storing information in the storage unit 110 is not limited thereto. For example, information can be stored via a recording medium or transmitted via communication lines, or input via input devices.

The learning information storage unit 111 stores learning information. Learning information can be referred to as a learning device, classifier, or learned model. In this embodiment, learning information is obtained by machine learning performed by the learning information generation unit 159, as described below. The learning information comprises weather learning information for obtaining weather information and path learning information for predicting paths. The types of learning information are not limited thereto. The details of learning information and its use will be described below.

The aircraft information storage unit 115 stores information regarding the target aircraft 810 and other aircraft 820 and 830. Information regarding each aircraft is stored in association with identifiers that identify the corresponding aircraft.

The weather information storage unit 117 stores weather-related information. The weather information storage unit 117 stores weather forecast information obtained from the information server 930 and weather information obtained by the weather information acquisition unit 145, as described below. It also stores past weather information measured and observed in the past. In this embodiment, weather-related information is stored corresponding to each area and altitude. The weather information storage unit 117 enables for identifying weather-related information corresponding to points or areas specified by latitude and longitude.

The receiving unit 120 receives information transmitted from other devices. The receiving unit 120 stores the received information in the storage unit 110. The receiving unit 120 is usually realized by wired or wireless communication means, but it can also be realized by means for receiving broadcasts.

The acceptance unit 130 accepts various input operations performed by the user on the information processing device 100. The acceptance unit 130 accepts information input through input means connected to the information processing device 100, such as a keyboard, or information read by reading devices connected to the information processing device 100, such as a code reader. It can also accept information transmitted through other devices connected via networks. The accepted information is stored in the storage unit 110.

The input means used for input to the acceptance unit 130 can be anything such as a numeric keypad, keyboard, mouse, or menu screen. The acceptance unit 130 can be realized by device drivers for input devices such as numeric keypads and keyboards, or control software for menu screens.

The processing unit 140 comprises an own aircraft information acquisition unit 141, an other aircraft information acquisition unit 143, a weather information acquisition unit 145, an airspace information acquisition unit 147, a path information acquisition unit 151, a result information acquisition unit 157, a learning information generation unit 159, and an output unit 161. The processing unit 140 performs various processes, including those performed by each part of the processing unit 140 as described below. The processing unit 140 is usually realized by MPU (including CPU and/or GPU) and memory. The processing procedures of the processing unit 140 are usually realized by software, and the software is recorded in recording media such as ROM. However, it can also be realized by hardware (dedicated circuits).

The own aircraft information acquisition unit 141 acquires condition information regarding the condition of the target aircraft 810. The condition of the target aircraft 810 comprises concepts such as the nature of the equipment, operational history, fuel consumption (including predicted values), and flight plans. The condition can be before, during, or after the flight. The own aircraft information acquisition unit 141 stores the acquired condition information in the aircraft information storage unit 115.

In this embodiment, the own aircraft information acquisition unit 141 is configured to acquire condition information using scheduled information regarding the flight plan of the target aircraft 810, aircraft characteristics information indicating characteristics regarding the equipment of the target aircraft 810, and operation history information regarding the operation history of the target aircraft 810. The own aircraft information acquisition unit 141 can acquire condition information using at least one of these pieces of information. Acquiring condition information using scheduled information, aircraft characteristics information, and operation history information comprises obtaining condition information through calculations using the information or acquiring the information itself as condition information.

Scheduled information, can be the content of the flight plan itself or information obtained from the flight plan. The own aircraft information acquisition unit 141 can acquire scheduled information using information input into the terminal device 600 or information registered in the information server 910.

Aircraft characteristics information comprises information that can specify the model of the aircraft or engine type. The own aircraft information acquisition unit 141 can acquire aircraft characteristics information using information registered in the information server 910.

Operation history information comprises information regarding maintenance history and operational history. The own aircraft information acquisition unit 141 can acquire operation history information using information registered in the information server 910.

The own aircraft information acquisition unit 141 can also acquire scheduled information based on input operations accepted by the acceptance unit 130. Further, the own aircraft information acquisition unit 141 can acquire information regarding the flight status of the target aircraft 810. For example, it can acquire current and past flight status information output from the target aircraft 810 based on standards such as ADS-B (Automatic Dependent Surveillance-Broadcast). In this case, past flight status information can be considered operation history information.

In this embodiment, the own aircraft information acquisition unit 141 comprises a consumption information acquisition unit 142 that acquires fuel consumption information regarding the fuel consumption rate of the target aircraft 810. Fuel consumption information indicates the fuel consumption rate of the target aircraft 810 under specified weather conditions. The consumption information acquisition unit 142 stores the acquired fuel consumption information in the aircraft information storage unit 115 associated with an identifier that specifies the target aircraft 810.

In this embodiment, the consumption information acquisition unit 142 acquires fuel consumption information using consumption learning information stored in the learning information storage unit 111. The consumption information acquisition unit 142 acquires fuel consumption information using machine learning-based acquisition, acquisition using correspondence relationships, or acquisition using functions, as described above. The input information can comprise information regarding the flight, weather information, and aircraft characteristics information. The acquired information (output information) is fuel consumption information. The acquired information can be information that allows the acquisition of fuel consumption information through calculations or judgments based on standards.

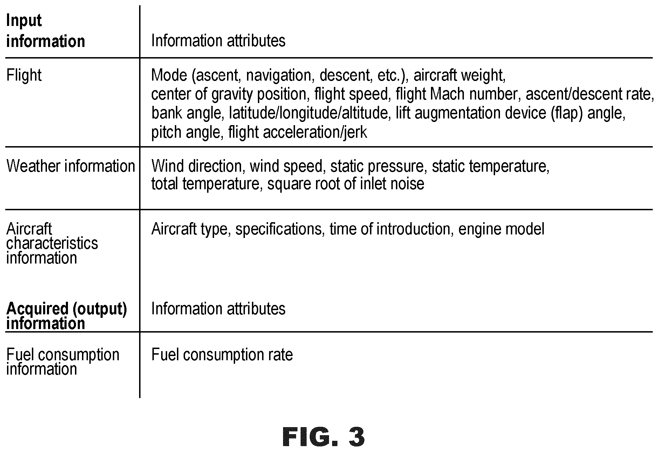

FIG. 3 explains a specific example of acquiring fuel consumption information in the information processing device 100.

FIG. 3, shows specific examples of input information and acquired information used for acquiring fuel consumption information by the consumption information acquisition unit 142. By using input information comprising attribute values and consumption learning information, the consumption information acquisition unit 142 can output attribute values of the acquired information.

As shown in FIG. 3, attribute values used as flight information comprise mode (climb, navigation, descent, etc.), aircraft weight, center of gravity position, flight speed, Mach number, climb/descent rate, bank angle, latitude, longitude, altitude, flap angle, pitch angle, flight acceleration, and jerk. Weather information comprises attribute values such as wind direction, wind speed, static pressure, static temperature, total temperature, and the square root of the inlet static temperature. Aircraft characteristics information comprises attribute values such as aircraft type, specifications, introduction time, and engine model. The acquired fuel consumption information comprises attribute values of fuel consumption rate.

Returning to FIG. 2, the other aircraft information acquisition unit 143 comprises a path prediction unit 144. The other aircraft information acquisition unit 143 acquires other aircraft information regarding other aircraft 820 and 830 different from the target aircraft 810. The other aircraft information acquisition unit 143 stores the acquired other aircraft information in the aircraft information storage unit 115. In this embodiment, the other aircraft information acquisition unit 143 acquires other aircraft information regarding a specified airspace associated with the self-information acquired by the own aircraft information acquisition unit 141, but this is not limited thereto. The specified airspace associated with the self-information is the airspace regarding the path of the target aircraft 810, such as the vicinity of the path of the target aircraft 810 on the flight plan, but this is not limited thereto.

The other aircraft information acquisition unit 143 acquires other aircraft information regarding the position of other aircraft 820 and 830. Other aircraft information regarding the position comprises information such as the longitude, latitude, and altitude of other aircraft 820 and 830 at a specific time. Other aircraft information regarding the position may not comprise altitude information. Past or current position information of other aircraft can be acquired based on information stored in the information server 930.

In this embodiment, the other aircraft information acquisition unit 143 acquires other aircraft information regarding the position of each of one or more other aircraft 820 and 830 after a specified time has elapsed, based on position information regarding the position of each of the other aircraft 820 and 830 (hereinafter referred to as position prediction information). In other words, the other aircraft information comprises information regarding the position of each of one or more other aircraft 820 and 830 after a specified time has elapsed. In other words, other aircraft information is information regarding future traffic flow including one or more other aircraft 820 and 830.

In this embodiment, the other aircraft information acquisition unit 143 acquires position prediction information using the route prediction unit 144. The route prediction unit 144, acquires position prediction information using route learning information stored in the learning information storage unit 111. The acquisition of position prediction information by the route prediction unit 144 can be realized, by using machine learning as described above, using corresponding relationships, or using functions. Here, the input information can comprise the history of position information of the group of other aircraft 820 and 830 (hereinafter sometimes simply referred to as the aircraft fleet), flight information of the aircraft fleet, information near the destination airport, aircraft (body) information of the aircraft fleet, and weather information. For weather information, past weather information and future weather forecasts can be used, but it is not limited thereto. The acquired information may be configured so that the position information group of the aircraft group after a certain period has elapsed is output as position prediction information. That is, the information on the time, latitude, and longitude for each aircraft may be output. The acquired information may also comprise altitude-related information. Further, the acquired information may be output in such a way that position information can be acquired through calculations or judgments based on other criteria. Moreover, the other aircraft information acquisition unit 143 can acquire the position prediction information of the aircraft fleet by outputting the acquired information for each aircraft that is the target of position prediction information acquisition by the route prediction unit 144, using route learning information, and aggregating the obtained acquired information. The route of the aircraft can change depending on various factors appearing in the input information as described above. The tendency for path selection may also vary depending on the aircraft model, airline, flight, segment, congestion status, deviation from the scheduled time, etc. By obtaining position prediction information based on these input information, more accurate position prediction information can be obtained.

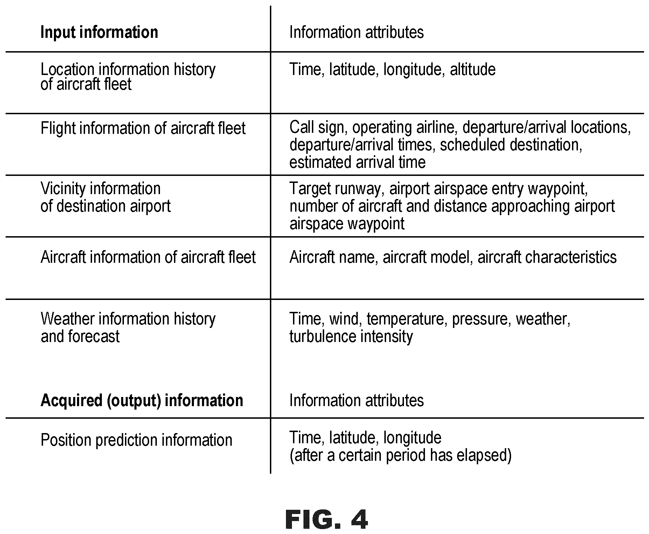

FIG. 4 explains a specific example of acquiring position prediction information in the information processing device 100.

FIG. 4 shows specific examples of input information and acquired information used for acquiring position prediction information by the path prediction unit 144. By using input information comprising attribute values and path learning information, the path prediction unit 144 can output attribute values of the acquired information.

As shown in FIG. 4, historical position information of the aircraft fleet comprises attribute values such as date and time, latitude, longitude, and altitude. Such historical position information can be given as JSON-format data for each aircraft, "{aircraft_id:[[2021-10-08 12:34:56, 35.12345, 136.12345],[ ...], ...], ...}". Here, "aircraft _id" is an identifier of the aircraft. The data format is not limited thereto and can be set as appropriate. Flight information of the aircraft group comprises attribute values such as call sign, operating airline, departure and arrival locations, departure and arrival times, estimated arrival location, and estimated arrival time. Information near the destination airport comprises attribute values such as the runway in use, the number and distance of aircraft approaching the airport airspace waypoint, and the waypoint at the entry of the airport airspace. Aircraft information of the aircraft group comprises attribute values such as aircraft name, model, and characteristics. Weather information comprises attribute values such as date and time, wind, temperature, pressure, weather, and turbulence intensity.

The acquired information, which is the position information group of the aircraft group after a certain period, comprises attribute values such as date and time, latitude, and longitude. The position information group may also comprise altitude. The position information group can also be referred to as traffic flow. The position information group is position prediction information that comprises position information corresponding to each of the related other aircraft 820 and 830.

The other aircraft information acquisition unit 143 acquires information acquired by other aircraft regarding the flight of other aircraft 820 and 830 acquired during flight as other aircraft information. Such information acquired by other aircraft can be acquired, from the information server 920 or the information server 930, but is not limited thereto. For example, the other aircraft information acquisition unit 143 may be configured to acquire the information by receiving information output from other aircraft 820 and 830, etc. In this embodiment, the other aircraft information acquisition unit 143 acquires atmospheric measurement information (other aircraft measurement information) regarding the atmospheric conditions measured by other aircraft 820 and 830 as other aircraft information. That is, the other aircraft information comprises other aircraft measurement information measured by other aircraft 820 and 830. The other aircraft information acquisition unit 143 acquires other aircraft measurement information stored in the information server 920 and accumulates it in the weather information storage unit 117. It is also possible to consider that the other aircraft information does not comprise other aircraft measurement information, and the weather information acquisition unit 145 acquires the other aircraft measurement information as weather information. The other aircraft information acquisition unit 143 may further be configured to acquire and store other aircraft condition information, including, information regarding the operating condition of actuators, etc. used for the flight of other aircraft 820 and 830 at a specified location or airspace, and information regarding sway/shake, acceleration, etc. obtained by avionics, etc., as other aircraft information.

Returning to FIG. 2, the weather information acquisition unit 145 acquires weather information, which comprises information regarding the atmospheric condition. The weather information acquisition unit 145 stores the acquired weather information in the weather information storage unit 117. In this embodiment, the weather information acquisition unit 145 acquires weather information regarding the airspace related to the path of the target aircraft 810 by altitude. The airspace for flight may also be referred to as the evaluation target airspace of the path. The airspace regarding the path of the target aircraft 810 is, the airspace near the path of the target aircraft 810 on the flight plan acquired by the own aircraft information acquisition unit 141, but is not limited thereto. The weather information acquisition unit 145, acquires weather forecast information from the information server 930 and stores the acquired information as weather information. The weather information acquisition unit 145, acquires past weather information and stores the acquired information as weather information.

In this embodiment, the weather information acquisition unit 145 acquires atmospheric prediction information regarding the atmospheric condition in the future as weather information. The weather information acquisition unit 145, acquires atmospheric prediction information based on forecast information of the atmospheric condition in the airspace where the target aircraft 810 will fly, obtained from the information server 930, and other aircraft measurement information regarding the airspace stored in the weather information storage unit 117. In this case, it may be said that the weather information acquisition unit 145 acquires weather information based on forecast information of the atmospheric condition regarding the airspace and information acquired by other aircraft regarding the airspace. The weather information acquisition unit 145 may acquire weather information using other aircraft condition information regarding the airspace instead of or in addition to other aircraft measurement information regarding the airspace. Other aircraft condition information, such as the presence of sway/shake and the operating status of actuators, can be used to acquire atmospheric prediction information, such as whether or not the airflow is unstable.

The weather information acquisition unit 145 acquires atmospheric prediction information using weather learning information stored in the learning information storage unit 111. The weather information acquisition unit 145 acquires atmospheric prediction information using machine learning-based acquisition, acquisition using correspondence relationships, or acquisition using functions, as described above. Here, weather forecast information and other aircraft measurement information measured by preceding aircraft can be used as input information. The acquired information is atmospheric prediction information. It may be configured to output information, that can be used to acquire atmospheric prediction information, etc., through calculations or judgements based on other criteria, as acquired information.

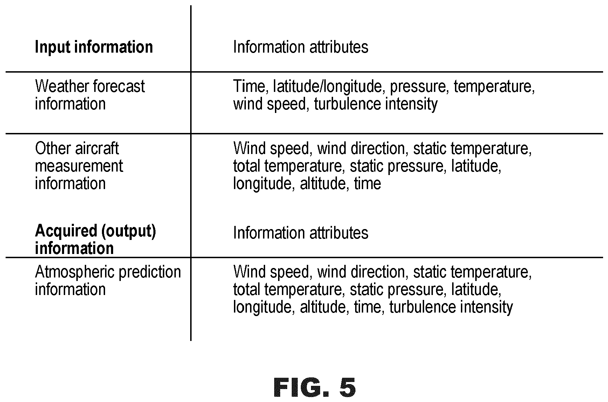

FIG. 5 explains a specific example of acquiring atmospheric prediction information in the information processing device 100.

FIG. 5 shows specific examples of input information used for acquiring atmospheric forecast information and examples of the acquired information. By using input information that comprises various attribute values and path learning information, the weather information acquisition unit 145 can output the attribute values of the acquired information.

As shown in FIG. 5, attribute values such as time, latitude and longitude, pressure, temperature, wind speed, and turbulence intensity are used as weather forecast information. Attribute values such as wind speed, wind direction, static temperature, total temperature, static pressure, latitude, longitude, altitude, and time can be used as other aircraft measurement information. The acquired atmospheric forecast information comprises attribute values such as wind speed, wind direction, static temperature, total temperature, static pressure, latitude, longitude, altitude, time, and turbulence intensity.

Returning to FIG. 2, The airspace information acquisition unit 147 acquires airspace information that comprises information regarding the airspace in which the aircraft can fly.. The airspace information acquisition unit 147 stores the acquired airspace information in the storage unit 110. The airspace information acquisition unit 147 acquires airspace information regarding the airspace that is related to the path of the target aircraft 810. The airspace information acquisition unit 147 may acquire airspace information for the vicinity of the path of the target aircraft 810 on the flight plan.

The airspace information acquisition unit 147 may acquire such airspace information from an information server 930 that contains airspace restriction information. Airspace information may also be acquired based on information obtained from the information server 930.

In this embodiment, the airspace information acquisition unit 147 may also acquire airspace information indicating airspace where the course of the aircraft can be changed. That is, airspace information may comprise either i) information defining flight-restricted airspace or ii) airspace where course changes are permitted. Such airspace information can be acquired based on information provided by the information server 930 or information entered beforehand by users and was accepted by the acceptance unit 130. The airspace information acquisition unit 147 may also acquire information entered beforehand by users such as pilots or flight operators regarding permitted airspace as airspace information. The airspace information acquisition unit 147 may also acquire information regarding permitted airspace based on past other aircraft information, i.e., historical position information of aircraft fleet, as airspace information. For example, by statistically processing the historical position information of aircraft fleet, information regarding airspace where flying is permitted can be acquired.

The path information acquisition unit 151 comprises a candidate information acquisition unit 153 and a path evaluation unit 155. The path information acquisition unit 151 acquires information regarding the path of the target aircraft 810 that meets specified conditions based on condition information, other aircraft information, and weather information.

In this embodiment, information regarding the path refers to information indicating the path that the target aircraft 810 should follow. Information regarding the path may be referred to as information regarding the trajectory, Information regarding the path may comprise information such as course, altitude, and speed. That is, the path information acquisition unit 151 is configured to acquire recommended path information, including information on the direction (course), altitude, and speed that the target aircraft 810 is recommended to pass, as information regarding the path. Information regarding the path may also comprise information indicating points, areas, or airspaces that should not be passed during the operation of the target aircraft 810. Information regarding the path may not comprise information on any of course, altitude, or speed. That is, the path information acquisition unit 151 may be configured to acquire recommended path information regarding course, altitude, or speed as information regarding the path.

In this embodiment, the specified conditions comprise at least conditions regarding fuel consumption of the target aircraft 810 or conditions regarding costs associated with the target aircraft 810. The specified conditions are set to achieve goals regarding either reducing fuel consumption or reducing costs for the target aircraft 810. Here, costs regarding the target aircraft 810 refer to maintenance costs or operational costs. Costs can mean monetary costs, human costs, time costs, or risk costs. Conditions regarding fuel consumption can be considered to be comprised in the conditions regarding costs. The specified conditions may be regarding different aspects or may comprise additional conditions regarding different aspects. The specified conditions may be set in relation to achieving goals including reduction of flight time, improvement of safety, etc. The specified conditions may be set in relation to achieving the goals of two or more of these aspects.

In this embodiment, a specified condition may be set, where the scores acquired for high-scored paths that likely lead to achieving goals as described below, are higher than or relatively high compared to a specified value. That is, the specified conditions can comprise conditions regarding scores. Note that scores can also be acquired such that paths that achieve the goals have lower scores, and in this case, the specified conditions can be set to be lower or relatively lower than a specified value. The specified condition may also be set to, a path that consumes less fuel than a compared path, a path that has lower maintenance costs, a path that has a shorter flight time, or a path that is safe. That is, a path that is closer to achieving goals when compared to other paths may be set as the specified condition.

The specified conditions are not limited to those that lead to cost reductions for the target aircraft 810. Specified conditions may be specified so that flying a path that meets the conditions for the target aircraft 810 leads to achieving the goals for the related aircraft 820. The specified conditions may comprise conditions regarding the costs of one or more related aircraft 820 different from the target aircraft. Costs associated with related aircraft 820 refer to maintenance costs or operation costs for related aircraft 820. Thus, information on more efficient paths that lead to achieving the goals for the organization using the operational support system 1, including the target aircraft 810 and related aircraft 820, can be obtained. Indicators of costs may be used as scores, and conditions regarding scores may be set as conditions regarding costs. If a score corresponds to the expected costs incurred by following a path, the specified conditions may comprise conditions where the score is lower or relatively lower than a specified value.

The path information acquisition unit 151 acquires candidate paths via the candidate information acquisition unit 153 as described below. The path information acquisition unit 151 then acquires recommended path information from the acquired candidate paths that meet the specified conditions. In this embodiment, the candidate information acquisition unit 153 acquires two or more candidates, and the path information acquisition unit 151 acquires one or more recommended path information from these candidates. The candidate information acquisition unit 153 may acquire one candidate, and the path information acquisition unit 151 may acquire this candidate as recommended path information if it meets the specified conditions.

In this embodiment, the path information acquisition unit 151 acquires scores corresponding to two or more candidate paths for the target aircraft 810 via the path evaluation unit 155. The path information acquisition unit 151 acquires one or more pieces of information regarding the path based on the acquired scores. For example, the path information acquisition unit 151 acquires the candidate with the highest score (an example of specified conditions) as recommended path information.

In this embodiment, the path information acquisition unit 151 acquires recommended path information each time the specified acquisition conditions are met. Specified acquisition conditions can comprise reaching a certain stage in the pre-flight process, a specific time, a certain time elapsed during flight, reaching a certain position or altitude, etc. In a case where the acquisition conditions are set to be met relatively frequently, it can be said that the path information acquisition unit 151 acquires the recommended route information in real time.

The candidate information acquisition unit 153 acquires candidates for recommended path information of the target aircraft 810 using condition information obtained by the own aircraft information acquisition unit 141, other aircraft information obtained by the other aircraft information acquisition unit 143, and weather information obtained by the weather information acquisition unit 145. In this embodiment, the candidate information acquisition unit 153 also uses airspace information acquired by the airspace information acquisition unit 147 for acquiring candidates. That is, the path information acquisition unit 151 acquires recommended path information using airspace information.

With the specified conditions including a path being within permitted airspace, the path information acquisition unit 151 may be configured to determine whether the candidates acquired by the candidate information acquisition unit 153 meet the specified conditions using airspace information,.

In this embodiment, the candidate information acquisition unit 153 is configured to acquire candidates for recommended path information using candidate learning information stored in the learning information storage unit 111. That is, the candidate information acquisition unit 153 can acquire candidates through machine learning-based acquisition, acquisition using correspondence relationships, or acquisition using functions. Here, the input information can comprise condition information, other aircraft information, weather information, and airspace information. The acquired information is information regarding the path. The candidate information acquisition unit 153 can acquire the acquired information as candidates using this input information. Specific examples will be described below. Information that can be used to acquire information regarding the path through calculations or other criteria may be output as the acquired information.

The candidate information acquisition unit 153 may be configured to acquire candidates without using learning information. In this case, the candidate information acquisition unit 153 acquires candidates according to specified rules using condition information, other aircraft information, and weather information. For example, the candidate information acquisition unit 153 can acquire a path determined not to interfere with other aircraft 820 and 830 based on other aircraft information and a path determined to be relatively easy to fly based on weather forecast information as candidates based on flight plans and other condition information.

The path evaluation unit 155 acquires scores based on condition information, other aircraft information, and weather information. In this embodiment, the path evaluation unit 155 is configured to acquire scores using learning information stored in the learning information storage unit 111. That is, the acquisition of candidates by the path evaluation unit 155 can be realized by machine learning-based acquisition, acquisition using correspondence relationships, or acquisition using functions. Here, the input information can comprise information on the candidate path, condition information, other aircraft information, and weather information. Airspace information can be comprised as input information. The acquired information is the score. The path evaluation unit 155 can acquire scores as acquired information using this input information. The acquired information may also be information that allows the acquisition of scores through calculations or other methods.

The path evaluation unit 155 may be configured to calculate the score for flying each candidate path based on generated evaluation rules using condition information, other aircraft information, and weather information. The evaluation rules can comprise evaluation conditions such as whether an atmospheric condition index passes through a specified point, speed, comparison results with the flight plan, and distances to other aircraft 820 and 830. For example, the score can be obtained by reflecting a first specified point in the score if the evaluation conditions are met and reflecting a second specified point in the score if not met, and then aggregating the scores. In the aggregation, scores can be calculated using specified formulas such as addition or multiplication.

The result information acquisition unit 157 acquires information regarding the operation results of the target aircraft 810 based on the output information when the recommended path information is output. When the goal is to reduce fuel consumption, the result information acquisition unit 157 acquires the fuel consumption measured by the instruments of the target aircraft 810 as the operation result of the target aircraft 810 based on the output information. The result information acquisition unit 157 stores the acquired operation result in the storage unit 110 associated with an identifier identifying the target aircraft 810 and an identifier that can specify the flight.

The path information acquisition unit 151 can compare the information acquired by the result information acquisition unit 157 with the predicted fuel consumption based on the recommended path information. The result information acquisition unit 157 may be configured to perform correction processing using the comparison results when acquiring new recommended path information and acquiring recommended path information based on the results. In such cases, the path information acquisition unit 151 acquires information regarding the path of the target aircraft 810 using the information acquired by the result information acquisition unit 157. This allows more accurate acquisition of information regarding the path of the target aircraft 810.

The learning information generation unit 159 generates learning information using machine learning techniques. The use of machine learning techniques can be done as described above. The learning information generation unit 159 stores the generated learning information in the learning information storage unit 111. The learning information may be prepared for each scenario where the learning information is used, such as for each aircraft, each aircraft model, each engine type, each flight path, each season, each relevant area, each landing airport, each departure airport, etc. In this case, the learning information generation unit 159 generates learning information for each scenario using a set of learning input information and acquired information (output information) for each scenario.

The learning information generation unit 159 may also regenerate learning information using the results obtained by the information processing device 100 when the information acquired using the learning information is newly acquired. For example, the learning information generation unit 159 may regenerate the learning information using the operation results when information regarding the operation results of the target aircraft 810 based on the recommended path information acquired using the learning information is output. The path information acquisition unit 151 may be configured to acquire new recommended path information using learning information generated based on the operation results. In this case, the path information acquisition unit 151 acquires recommended path information for the target aircraft 810 using the operation results acquired by the result information acquisition unit 157.

The output unit 161 outputs information by sending information to other devices using the transmission unit 170 or by displaying information on a display device provided in the information processing device 100. The output unit 161 may or may not comprise output devices such as displays or speakers. The output unit 161 may be realized by driver software for output devices or by driver software for output devices and output devices.

In this embodiment, the output unit 161 outputs output information to the terminal device 600 used by ground users or the terminal device 600 used by the pilot of the target aircraft 810, which is an electronic flight bag. Ground users may comprise ground flight managers, pre-departure pilots, or airline personnel, but are not limited thereto. This allows pilots and ground users to observe the output information using the terminal device 600 and utilize it for flight operations.

The output unit 161 comprises an output information configuration unit 163. The output unit 161 outputs output information based on the information acquired by the path information acquisition unit 151. The output information is configured by the output information configuration unit 163.

In this embodiment, the output information configuration unit 163 is configured to output flight setting information used for instrument flight of the target aircraft 810 based on the recommended path information acquired by the path information acquisition unit 151. Flight setting information is information that the pilot uses to input settings into the target aircraft 810. If the target aircraft 810 can accept information transmitted from the information processing device 100, flight setting information may be transmitted to the target aircraft 810 and reflected in the flight. The output unit 161 outputs the configured flight setting information. The output information is not limited thereto. The output information configuration unit 163 may configure output information in different formats using information indicating the path. The output unit 161 may be configured to output path information directly as output information. The output information configuration unit 163 may configure output information using evaluation information based on scores acquired by the path evaluation unit 155 corresponding to the path information. For example, output information may be configured to display images such as scores and corresponding ranks along with information indicating the path.

In this embodiment, the output unit 161 outputs output information based on the information acquired by the path information acquisition unit 151 each time the specified output conditions are met during the flight of the target aircraft 810. Here, the output condition may be the acquisition of new path information by the path information acquisition unit 151. The path information acquisition unit 151 can output information based on the acquired path information in real-time during the flight of the target aircraft 810. The output condition may be different. If the path information is acquired and the output information is output, detecting that the target aircraft 810 is flying a path different from the one corresponding to the output information can be an output condition. By re-outputting the output information when deviating from the path, the pilot can be prompted to change the path. The output condition may also be the acceptance of an output information request from the terminal device 600. The output unit 161 may be configured to output the output information under specified conditions regardless of whether the output condition is met.

In this embodiment, the output unit 161 outputs output information in a specified output mode (which can be referred to as a notification mode) different from the output mode (normal mode) when the specified notification conditions regarding the information acquired by the path information acquisition unit 151 are met. Here, the notification condition may be the acquisition of new path information by the path information acquisition unit 151, but it is not limited thereto. For example, the notification condition may be a specified difference between the newly acquired path information and the previously acquired path information, or the newly acquired path information requiring a specified change in the flight condition from the current flight condition of the target aircraft 810, or the condition information of the target aircraft 810 being in a specified condition. A specified difference may be, a speed difference or altitude difference exceeding a specified value, or a distance from a position that should be passed at a specified time exceeding a specified distance. A specified change in flight condition may be, a required change in speed or attitude exceeding a specified amount from the current condition. A specified condition of condition information may be, a specified flight time elapsed, a specified amount of remaining fuel, or a distance to a destination or waypoint calculated based on condition information reaching a specified value. The acceptance of an output information request from the terminal device 600 may also be a notification condition. There may also be cases where the notification conditions are met when the output conditions are met.

The difference between the normal mode and the specified notification mode may comprise, differences in the output destination terminal device 600, color, text, or specific images displayed on the terminal device 600, the presence or absence of audio output, and different output methods. A difference in output means may be, that one is a display on a screen and the other is the sending of a message by a specified message sending means, or that a so-called push notification is or is not sent in conjunction with the output of the output information.

By configuring the output information to be output in a different mode than usual under specified conditions, it becomes easier for pilots and flight managers to recognize that output information has been output under those conditions.

When multiple pieces of recommended path information are acquired, the output unit 161 may be configured to output each of the multiple paths as output information, or to output output information regarding a path corresponding to a selection instruction to select one of the multiple paths transmitted via via the terminal device 600.

The transmission unit 170 transmits information to other devices capable of communication via a network. The transmission unit 170 is usually realized by wireless or wired communication means, but may be realized by broadcasting means.

The next section explains the flow of operations of the information processing device 100. The information processing device 100 performs various operations as described below. These operations are carried out by the processing unit 140 executing control operations using each unit.

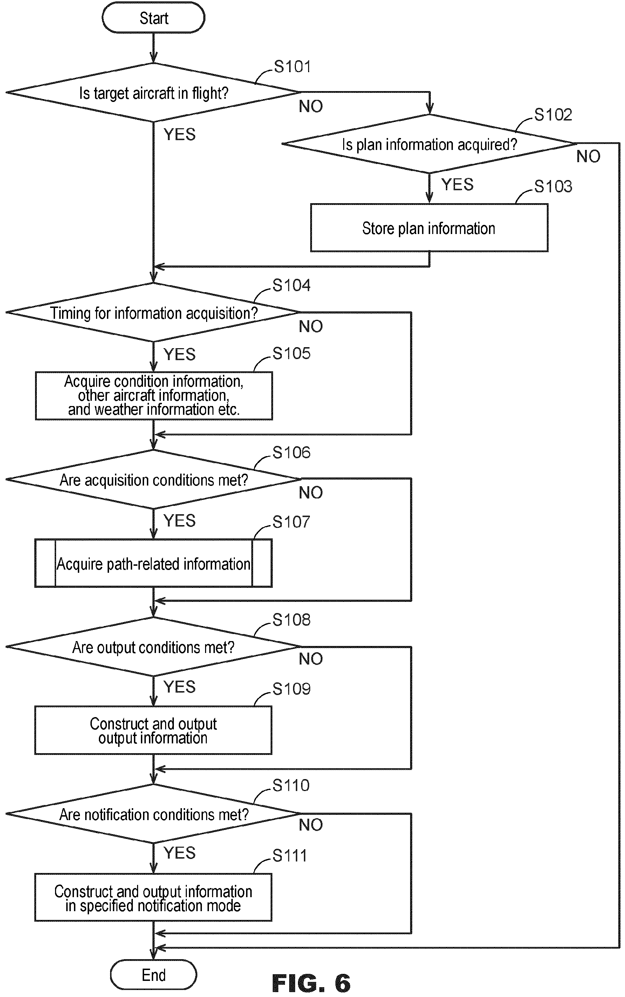

FIG. 6 is a flowchart illustrating the operation flow of the information processing device 100.

(Step S101) The processing unit 140 determines whether the target aircraft 810 is in flight. If it is in flight, the process proceeds to step S104; otherwise, it proceeds to step S102.

(Step S102) The processing unit 140 determines whether scheduled information for the target aircraft 810 has been acquired. If the flight plan for the next flight has been input, the processing unit 140 determines that the scheduled information has been acquired. If it is determined that the scheduled information has been acquired, the process proceeds to step S103; otherwise, the process ends.

(Step S103) The processing unit 140 stores the acquired scheduled information in the aircraft information storage unit 115. The process then proceeds to step S104.

(Step S104) The processing unit 140 determines whether the information acquisition timing has arrived. For example, it is determined that the information acquisition timing has arrived if an instruction is given by the user, if plan information is acquired, or if a certain period has passed since the last acquisition during the flight. If the information acquisition timing has arrived, the process proceeds to Step S105; otherwise, it proceeds to Step S106.

(Step S105) The processing unit 140 acquires condition information, other aircraft information, and weather information. The acquisition of this information may be done as described above. Airspace information may also be acquired. Information regarding operation results may also be acquired. The generation or update of learning information may also be performed. The process then proceeds to step S104.

(Step S106) The processing unit 140 determines whether the acquisition conditions are met. If it is determined that the acquisition conditions are met, the process proceeds to step S107; otherwise, it proceeds to step S108.

(Step S107) The processing unit 140 acquires information regarding the path. That is, the processing unit 140 performs the recommended path information acquisition process. This process will be described in detail below. The process then proceeds to step S108.

(Step S108) The processing unit 140 determines whether the output conditions are met. If it is determined that the output conditions are met, the process proceeds to step S109; otherwise, it proceeds to step S 110.

(Step S109) The processing unit 140 constructs and outputs output information using the recommended path information. The process then proceeds to step S110.

(Step S110) The processing unit 140 determines whether the notification conditions are met. If it is determined that the notification conditions are met, the process proceeds to step S111; otherwise, the process ends.

(Step S111) The processing unit 140 constructs and outputs output information using the recommended path information. In this case, the processing unit 140 ensures that the output information is output in the specified notification mode. The process then ends.

Such processing is periodically repeated. The sequence of these steps is not limited thereto. If output information for a flight has already been configured, it may be used for re-output or for output in a specified notification mode.

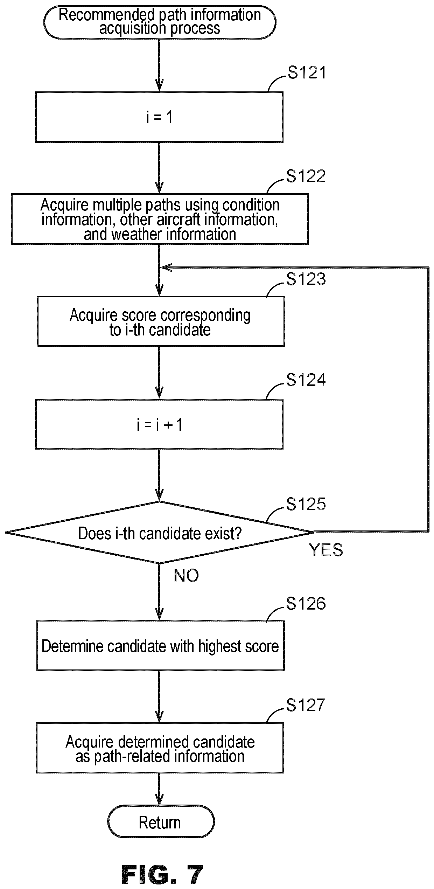

FIG. 7 is a flowchart explaining the recommended path information acquisition process of the information processing device 100.

(Step S121) The path information acquisition unit 151 sets the counter i to 1.

(Step S122) The path information acquisition unit 151 acquires multiple candidates using condition information, other aircraft information, and weather information via the candidate information acquisition unit 153.

(Step S123) The path information acquisition unit 151 acquires a score corresponding to the i-th candidate using the path evaluation unit 155.

(Step S124) The path information acquisition unit 151 increments the counter i by 1.

(Step S125) The path information acquisition unit 151 determines whether the i-th candidate exists. If it exists, the process returns to step S123; otherwise, it proceeds to step S126.

(Step S126) The path information acquisition unit 151 determines the candidate with the highest score among the candidates. In other words, the path information acquisition unit 151 acquires the candidate that meets the condition of having the highest score.

(Step S127) The path information acquisition unit 151 acquires the determined candidate as information regarding the path. The process then returns to the higher-level process.

The information processing device 100 configure as above according to this embodiment can acquire information regarding the path of the target aircraft 810 and output output information, in following situations.

### (Altitude Setting Support)

The information processing device 100 can output output information for altitude optimization of the target aircraft 810 during flight. As output information in this case, recommended path information comprising altitude settings and speed information during altitude transition may be comprised.

The output of output information for altitude setting may be performed as follows. The path information acquisition unit 151 acquires candidates for recommended path information, including altitude settings and speed information for altitude transition, via the candidate information acquisition unit 153. The path information acquisition unit 151 acquires recommended path information based on the scores acquired for each candidate by the path evaluation unit 155. The output unit 161 outputs output information based on the acquired recommended path information.

The candidate information acquisition unit 153 uses input information such as aircraft characteristics information, the position information history of the target aircraft 810, information regarding the flight condition of the target aircraft 810, flight information of the target aircraft 810, weather information, past weather information and atmospheric forecast information, position prediction information, and fuel consumption information. Using these input information and learning information, the candidate information acquisition unit 153 acquires recommended path information (information regarding trajectory) as acquired information. The acquired information may also be information that allows the acquisition of candidates through calculations or other criteria.

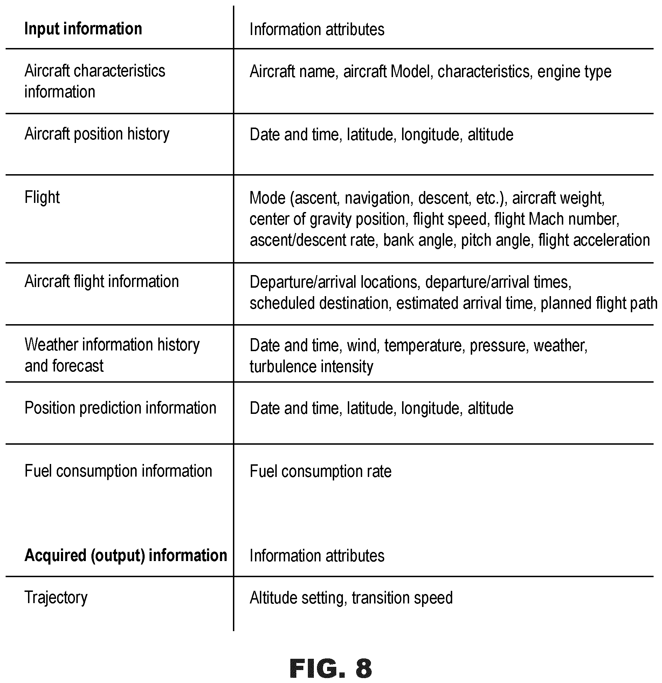

FIG. 8 is a diagram explaining a specific example of the operation of the path information acquisition unit 151 during altitude setting in the information processing device 100.

In FIG. 8 shows specific examples of input information used for acquiring candidates during altitude setting and examples of acquired information. The path information acquisition unit 151 can output the attribute values of the acquired information by using input information containing attribute values and pre-prepared learning information.

As shown in FIG. 8, attribute values such as the aircraft name, aircraft model, aircraft characteristics, and engine type may be used as aircraft characteristics information. Attribute values such as date, latitude, longitude, and altitude may be used as the position information history of the target aircraft 810. Attribute values such as mode (climb, navigation, descent, etc.), aircraft weight, center of gravity position, flight speed, Mach number, climb/descent rate, bank angle, pitch angle, and flight acceleration may be used as information regarding the flight condition of the target aircraft 810. Attribute values such as departure and arrival points, departure and arrival times, expected arrival point, expected arrival time, and planned flight path may be used as flight information of the target aircraft 810. Attribute values such as date, wind, temperature, pressure, weather, and turbulence intensity may be used as weather information. Attribute values such as date, latitude, longitude, altitude, and equipment may be used as position prediction information. Attribute values such as fuel consumption rate may be used as fuel consumption information. Attribute values such as altitude settings and transition speeds may be used as information regarding candidates which is acquire information.

When recommended path information regarding altitude settings is acquired and output information is output, users can utilize the information processing device 100 with the following steps.

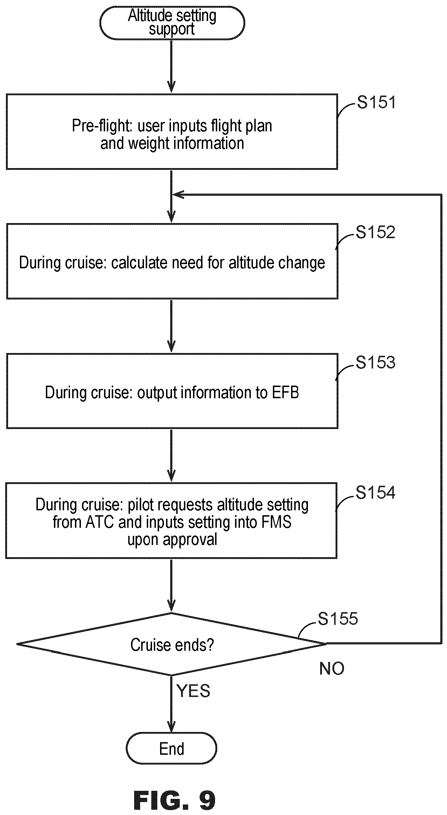

FIG. 9 is a flowchart explaining an example of using the altitude setting support function of the information processing device 100.

(Step S151) Before flight, the user (such as a pilot or flight manager) inputs information regarding the flight plan and weight of the target aircraft 810. The own aircraft information acquisition unit 141 of the information processing device 100 acquires these inputs.

(Step S152) During cruise, using appropriately acquired information, the path information acquisition unit 151 performs the process of acquiring recommended path information for altitude setting. That is, the necessity of altitude change is calculated. Until the output conditions or notification conditions are met, output information is not output, but this is not limited thereto.

(Step S153) When the output conditions or notification conditions are met, the output information is output to the terminal device 600. Here, the output information is output to and displayed on an electronic flight bag that the pilot can observe.

(Step S154) The pilot confirms the content of the output information and determines whether to change the altitude. If changing the altitude, the pilot applies for altitude setting to air traffic control (ATC) and sets the altitude in the flight management system (FMS) of the target aircraft 810 upon approval.

(Step S155) During cruise, the flow from step S152 to step S154 is repeated. When the cruise ends, the use of the altitude setting support function is completed.

Utilizing such an altitude setting support function provides specific benefits in this embodiment. For example, it is possible to output information regarding the cruising altitude that allows more efficient operation of the aircraft based on the traffic volume of other aircraft 820 and 830 in flight and atmospheric forecast information and condition information of the target aircraft 810. Conventionally , it has been difficult to grasp the best path with the actual traffic flow taken into account in cruise scenarios. In many cases, altitude adjustments during cruise were limited or performed in specified manners unless made necessary due to weather or traffic conditions. In this embodiment, users can grasp information regarding the efficient cruising altitude in real-time during flight and apply for changes to ATC in a timely manner. Therefore, the target aircraft 810 can be operated more efficiently.

### (Continuous Climb and Continuous Descent Setting Support)

The information processing device 100 can output output information for optimizing the path of the target aircraft 810 during continuous climb operation (CCO) or continuous descent operation (CDO). As output information in this case, recommended path information comprising information on passing altitude settings and speed information may be comprised.

The output of output information for CCO and CDO may be performed as follows. The path information acquisition unit 151 acquires candidates for recommended path information, including passing altitude settings and speed information, through the candidate information acquisition unit 153. The path information acquisition unit 151 acquires recommended path information based on the scores acquired for each candidate by the path evaluation unit 155. The output unit 161 outputs output information based on the acquired recommended path information.

The candidate information acquisition unit 153 uses input information such as weather information (past weather information and atmospheric forecast information), airspace information, flight information of the target aircraft 810, aircraft characteristics information, position prediction information, and fuel consumption information. Airspace information, in this case, may comprise airspace restriction information regarding the departure or arrival airport. Using these input information and prepared learning information, the candidate information acquisition unit 153 acquires recommended path information (information regarding trajectory) as acquired information. The acquired information may also be information that allows the acquisition of candidates through calculations or other criteria.

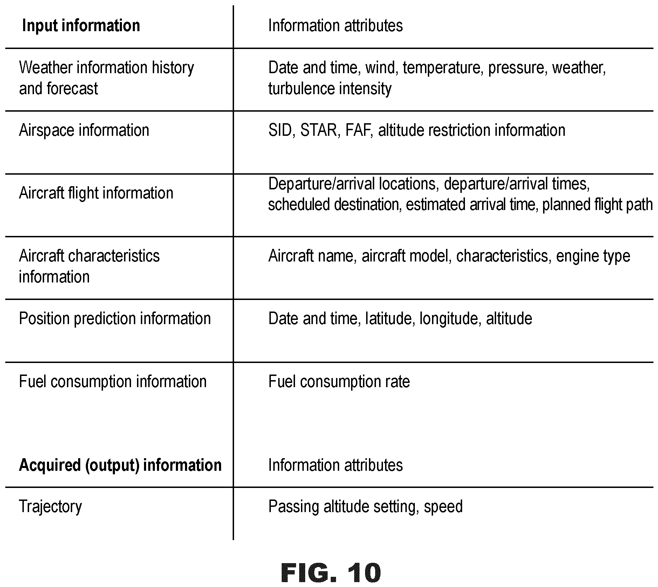

FIG. 10 is a diagram explaining a specific example of the operation of the path information acquisition unit 151 during CCO or CDO in the information processing device 100.

FIG. 10 shows specific examples of input information used for acquiring candidates during CCO or CDO and examples of acquired information. Using input information containing attribute values and learning information, the path information acquisition unit 151 can output the attribute values of the acquired information.

As shown in FIG. 10, attribute values such as date, wind, temperature, pressure, weather, and turbulence intensity may be used as weather information. Attribute values such as SID, STAR, FAF, and altitude restriction information may be used as airspace information. Attribute values such as departure and arrival points, departure and arrival times, expected arrival point, expected arrival time, and planned flight path may be used as flight information of the target aircraft 810. Attribute values such as the aircraft name, aircraft model, aircraft characteristics, and engine type may be used as aircraft characteristics information. Attribute values such as date, latitude, longitude, altitude, and equipment may be used as position prediction information. Attribute values such as fuel consumption rate may be used as fuel consumption information. Attribute values such as passing altitude settings and speed may be used as information regarding candidates.

The information regarding passing altitude settings comprised in the recommended path information for CCO and CDO may preferably be a climb profile or descent profile. In this embodiment, information regarding the path may comprise at least one of the climb profile and descent profile that the target aircraft 810 is recommended to pass. This allows the output of more useful information for efficiently flying the aircraft during CCO or CDO. Path information may preferably comprise target altitude information for two or more waypoints or specific points in the climb profile or descent profile, and output information comprising target altitude information is preferably output. This makes it easier to efficiently fly the aircraft during CCO or CDO.

When recommended path information for CCO or CDO is acquired and output information is output, users can utilize the information processing device 100 with following steps.

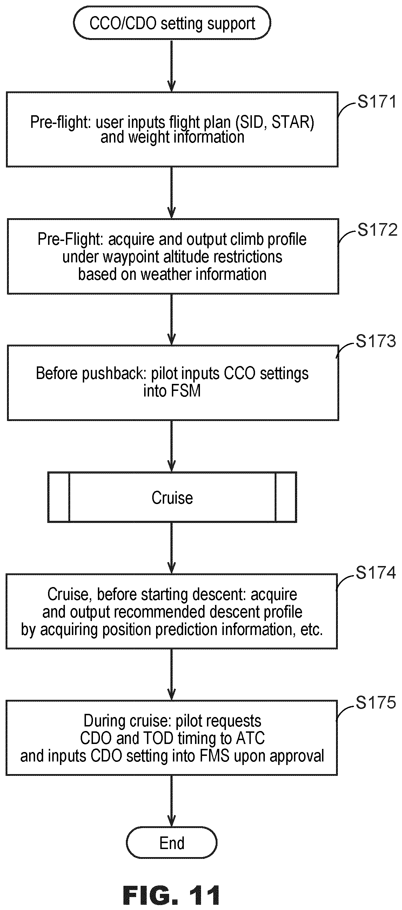

FIG. 11 is a flowchart explaining an example of using the continuous climb and continuous descent setting support function of the information processing device 100.

(Step S171) Before flight, users input information regarding the flight plan and weight of the target aircraft 810. Here, information such as SID or STAR is input as the flight plan. The own aircraft information acquisition unit 141 of the information processing device 100 acquires these inputs.

(Step S 172) Before flight, using the acquired weather information and other information, the path information acquisition unit 151 performs the process of acquiring recommended path information regarding the climb profile. Based on the acquired information, output information is output to the terminal device 600. The climb profile is acquired to meet the altitude restrictions of each waypoint based on airspace restriction information.

(Step S173) Before pushback, the pilot inputs the CCO setting into the FMS of the target aircraft 810 based on the output information. This allows efficient CCO according to the recommended path information. After takeoff, the target aircraft enters a cruising condition.

(Step S174) Before starting descent, the information processing device 100 acquires position prediction information, etc. The path information acquisition unit 151 acquires recommended path information regarding the descent profile and outputs the output information to the EFB. In this case, it is preferable to acquire and output information on descent profiles for two or more TOD candidates.

(Step S175) The pilot confirms the content of the output information and determines whether to perform CDO with the recommended descent profile. If performing CDO, the pilot applies for CDO to ATC and requests instructions for the timing of TOD. Upon approval, the pilot selects the descent profile that can be performed from the instructed TOD timing and inputs the CDO setting into the FMS of the target aircraft 810.

The information processing device 100 may be configured to acquire and output descent profiles that are less affected by other aircraft 820 and 830 based on traffic flow information when performing CDO. In this case, the pilot may apply for CDO to ATC and apply for timing corresponding to the output information as TOD. This increases the likelihood of approval and reduces the need for vectoring. The descent profile is acquired to meet the altitude restrictions of each waypoint based on airspace restriction information.

Utilizing such continuous climb and continuous descent setting support functions provides specific benefits in this embodiment. In scenarios where continuous descent operation is performed, it is possible to efficiently descend at an altitude and speed that match the airport airspace traffic flow, reducing the possibility of needing to deviate. Conventionally, optimal descent paths calculated by the aircraft did not consider traffic flow, and vectoring might have been done based on ATC judgment in airport airspace. Using the information processing device 100 allows adopting efficient descent trajectories based on the traffic flow in the airport airspace and making continuous descent operations easier.

In scenarios where continuous descent operation is performed, it is possible to efficiently descend at an altitude and speed that match the airport airspace traffic flow, reducing the possibility of needing to deviate. Conventionally, optimal descent paths calculated by the aircraft did not consider traffic flow, and vectoring might have been done based on ATC judgment in airport airspace. Using the information processing device 100 allows adopting efficient descent trajectories based on the traffic flow in the airport airspace and making continuous descent operations

In scenarios where continuous climb operation is performed, it becomes possible to operate along an efficient climb trajectory based on high-accuracy atmospheric forecast information. Under regulations regarding altitude and speed for climb methods, the general practice was to climb to an altitude below a specified airspeed regardless of atmospheric conditions. In contrast, the information processing device 100 can acquire and output climb paths that can efficiently climb at different altitudes based on weather information measured by other aircraft 820 and 830.

### (Shortcut Path Setting Support)

The information processing device 100 can output output information (Direct-to information) for flying a shortcut path by changing the course of the target aircraft 810 during flight. The output information in this case may comprise recommended path information that comprises information on the shortest path, information on the set altitude, and information on the transition speed.

The output information for flying a shortcut path may be output as follows. The path information acquisition unit 151 acquires candidates for recommended path information, including information on the shortcut path, altitude settings, and transition speed, through the candidate information acquisition unit 153. The path information acquisition unit 151 acquires recommended path information based on the scores acquired for each candidate by the path evaluation unit 155. The output unit 161 outputs output information based on the acquired recommended path information.

The candidate information acquisition unit 153 uses input information such as aircraft characteristics information, the position information history of the target aircraft 810, flight information of the target aircraft 810, information regarding the flight condition of the target aircraft 810, weather information (past weather information and atmospheric forecast information), position prediction information, and fuel consumption information. Using these input information and learning information, the candidate information acquisition unit 153 acquires recommended path information (information regarding trajectory) as acquired information. The acquired information may also be information that allows the acquisition of candidates through calculations or other criteria.

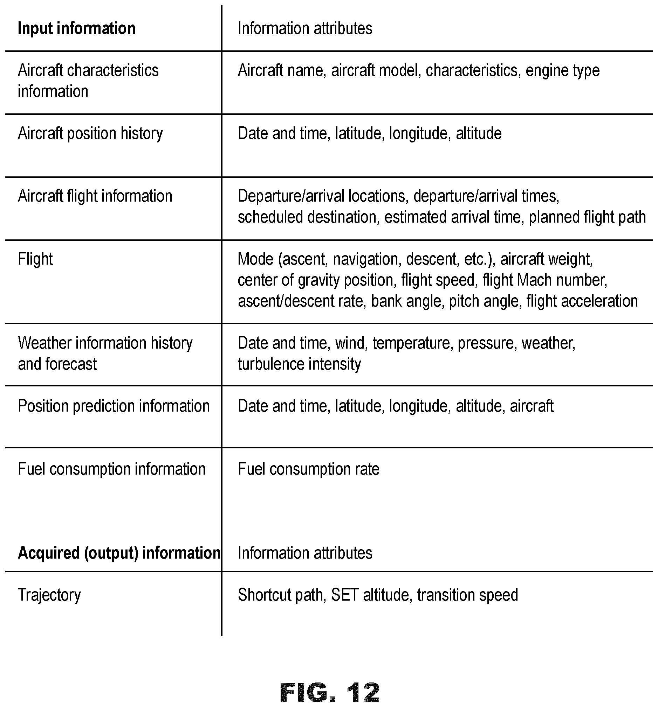

FIG. 12 is a diagram explaining a specific example of the operation of the path information acquisition unit 151 during shortcut path setting in the information processing device 100.

FIG. 12 shows specific examples of input information used for acquiring candidates for flying a shortcut path and examples of acquired information. Using input information containing attribute values and learning information, the path information acquisition unit 151 can output the attribute values of the acquired information.

As shown in FIG. 12, attribute values such as the aircraft name, aircraft model, aircraft characteristics, and engine type may be used as aircraft characteristics information. Attribute values such as departure and arrival points, departure and arrival times, expected arrival point, expected arrival time, and planned flight path may be used as flight information of the target aircraft 810. Attribute values such as date, latitude, longitude, and altitude may be used as the position information history of the target aircraft 810. Attribute values such as mode (climb, navigation, descent, etc.), aircraft weight, center of gravity position, flight speed, Mach number, climb/descent rate, bank angle, pitch angle, and flight acceleration may be used as information regarding the flight condition of the target aircraft 810. Attribute values such as date, wind, temperature, pressure, weather, and turbulence intensity may be used as weather information. Attribute values such as date, latitude, longitude, altitude, and equipment may be used as position prediction information. Attribute values such as fuel consumption rate may be used as fuel consumption information. Attribute values such as shortcut path, altitude settings, and transition speed may be used as information regarding candidates which is the acquired information.

When recommended path information for flying a shortcut path is acquired and output information is output, users can utilize the information processing device 100 with the following steps.

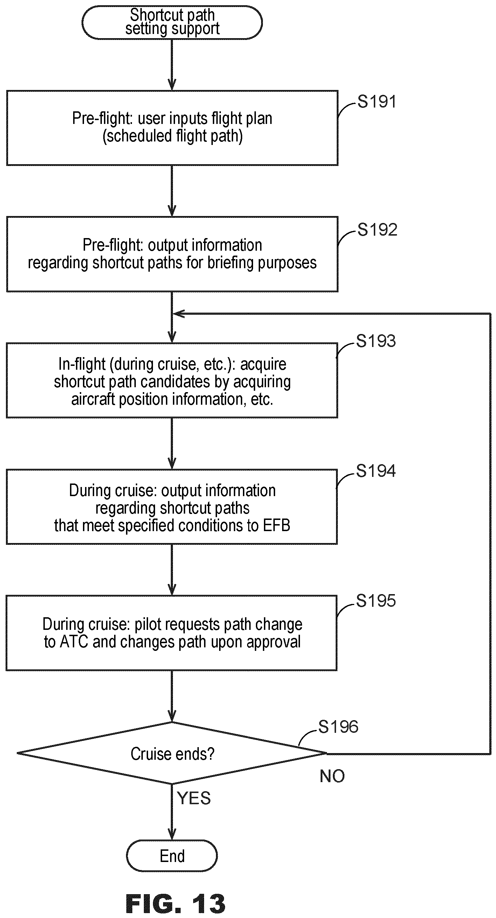

FIG. 13 is a flowchart explaining an example of using the shortcut path setting support function of the information processing device 100.

(Step S191) Before flight, users input the flight plan of the target aircraft 810. The own aircraft information acquisition unit 141 of the information processing device 100 acquires the input information.

(Step S192) Before flight, using the input information and other acquired information, the information processing device 100 outputs information regarding the shortcut path to the terminal device 600 used by the flight manager or other users. The flight manager or the pilot of the target aircraft 810 can utilize the output information for briefing.

(Step S193) During flight, especially during cruise, the information processing device 100 acquires the position information of the target aircraft 810 and other information. The path information acquisition unit 151 repeatedly acquires candidates for shortcut paths and determines whether the specified conditions are met.

(Step S 194) During cruise, if the path information acquisition unit 151 acquires a shortcut path that meets the specified conditions, the information processing device 100 outputs the information regarding the shortcut path to the terminal device 600. Here, the output information is output to and displayed on an electronic flight bag that the pilot can observe.

(Step S195) The pilot confirms the content of the output information and determines whether to change the course. If changing the course, the pilot applies for the course change (Direct-to) to ATC and changes the path of the target aircraft 810 upon approval.

(Step S 196) During cruise, the flow from step S 193 to step S 195 is repeated. When the cruise ends, the use of the shortcut path setting support function is completed.

Utilizing such a shortcut path setting support function provides specific benefits in this embodiment. Applying for flying a shortcut path when possible becomes easier, allowing the efficient operation of the target aircraft 810. Conventionally, although applying for flying a shortcut path depending on traffic flow and weather conditions has always been possible, doing so by taking into account various factors largely relied on the individual experience of the user. Using the information processing device 100, output information is provided when flying a shortcut path is feasible and efficient taking into account the condition of own aircraft, other aircraft, and weather, making it easier for users such as pilots to apply for flying appropriate shortcut paths.

There are points along the aircraft's path where applying for flying a shortcut path is likely to be approved. In this embodiment, using information regarding past flight paths of aircraft and past traffic flow information to generate learning information or analyzing this information to set specified conditions can recommend flying a shortcut path at points or situations where application is more likely to be approved. As a result, it becomes easier for users to fly a shortcut path.

As described above, according to this embodiment, since the output information is based on information regarding the path of the aircraft, it can be utilized to fly the aircraft. The acquired information regarding the path meets specific conditions, enabling an efficient flight of the aircraft. In other words, since the acquired information regarding the path meets specific conditions, it become possible to fly the aircraft to achieve desired goals.

In this embodiment, since information regarding the path is obtained using weather information, the output information can be utilized to efficiently fly aircraft even if atmospheric conditions change. The weather information may comprise atmospheric prediction information which is predicted using atmospheric measurement information measured by preceding aircraft. By using more accurate atmospheric prediction information to acquire information regarding the path, the output information can be utilized to efficiently fly aircraft.

Fuel consumption information and location prediction information are used to acquire information regarding the path. Therefore, more reliable output information to efficiently fly aircraft can be output. By acquiring information regarding the path with high real-time accuracy based on information regarding the target aircraft and other aircraft under the latest conditions, as well as the latest weather information, more reliable output information to efficiently fly aircraft can be output.

In this embodiment, airspace information is used to acquire information regarding the path. Therefore, output information regarding the actual flight path can be provided. Even areas, where deviations from the normal standard paths are permitted, are limited, output information that addresses this can be provided.

The processes in this embodiment may be implemented by software. This software may be distributed via software downloads. This software may also be recorded on a recording medium such as an CD-ROM for distribution. The software that implements the information processing device 100 in this embodiment is a program, executed on the computer of the information processing device 100, directs the computer to function as: an own aircraft information acquisition unit for acquiring condition information regarding the target aircraft; an other aircraft information acquisition unit for acquiring other aircraft information regarding other aircraft different from the target aircraft; a weather information acquisition unit for acquiring wether information comprising atmospheric conditions, a path information acquisition unit for acquiring information regarding the path of the target aircraft 810 that meets specified conditions based on condition information, other aircraft information, and weather information; and an output unit for outputting output information based on the information acquired by the path information acquisition unit.

### (N.B.)

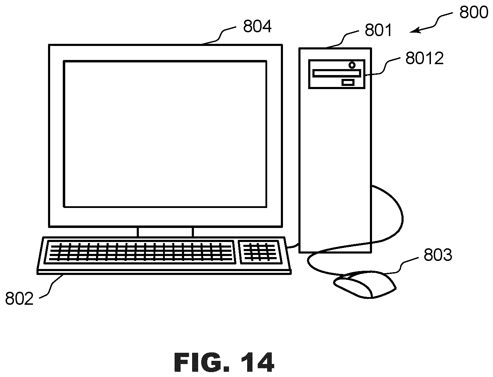

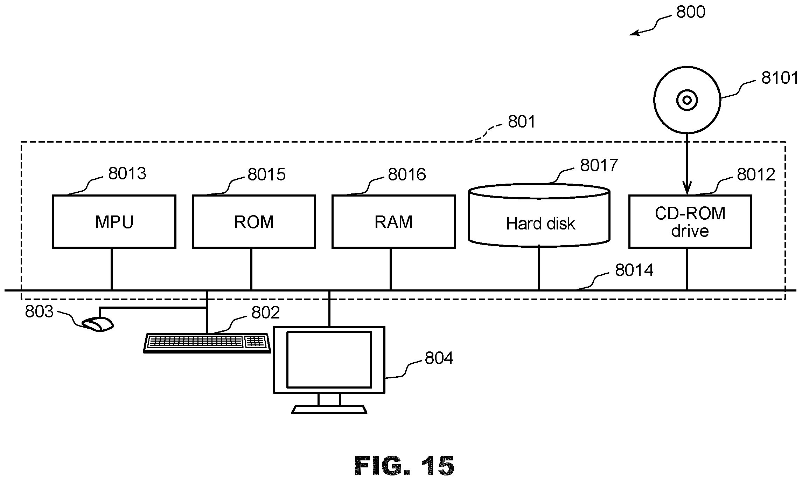

FIG. 14 is an overview diagram of the computer system 800 in the above embodiment. FIG. 15 is a block diagram of the same computer system 800.

These diagrams show the configuration of a computer that realizes the information processing device in the above embodiment by executing the program described in this specification. The above embodiment can be realized by computer hardware and the computer program executed on it.

The computer system 800 comprises a computer 801 with a CD-ROM drive, a keyboard 802, a mouse 803, and a monitor 804.

The computer 801 comprises an MPU 8013, a bus 8014 connected to the CD-ROM drive 8012, a ROM 8015 for storing programs such as boot-up programs, a RAM 8016 connected to the MPU 8013 for temporarily storing application program instructions and providing temporary storage space, and a hard disk 8017 for storing application programs, system programs, and data. Although not shown here, the computer 801 may also comprise a network card for providing connection to a LAN.

The program for executing the functions of the information processing device in the above embodiment may be stored on a CD-ROM 8101, inserted into the CD-ROM drive 8012, and transferred to the hard disk 8017. Alternatively, the program may be transmitted to the computer 801 via a network (not shown) and stored on the hard disk 8017. The program is loaded into the RAM 8016 during execution. The program may be loaded directly from the CD-ROM 8101 or the network.

The program does not necessarily comprise an operating system (OS) or third-party programs in the computer system 801 that execute the functions of the information processing device in the above embodiment. The program may comprise only the parts of instructions that call appropriate functions (modules) under controlled conditions to achieve the desired results. How the computer system 800 operates is well known and is not described in detail.

The program described above may comprise transmission steps for transmitting information or reception steps for receiving information. These steps do not comprise processing performed by hardware, such as modem or interface card processing in transmission steps.

The computer executing the program described above may be single or multiple. That is, centralized processing or distributed processing may be performed.

In the above embodiment, two or more components present in one device may be physically realized by one medium.

In the above embodiment, each process (function) may be realized by centralized processing in a single device (system) or by distributed processing in multiple devices. In this case, the entire system composed of multiple devices performing distributed processing can be regarded as one "device."

In the above embodiment, the transfer of information between components may be performed by the output of information by one component and the reception of information by another component if they are physically different, or by transferring from one processing phase corresponding to one component to another processing phase corresponding to another component if they are physically the same.

In the above embodiment, information regarding each process, such as thresholds, formulas, addresses, etc., used by each component, may be temporarily or long-term stored in a recording medium not shown in the above description. Information accumulation may be performed by each component or a non-illustrated storage unit. Information reading may be performed by each component or a non-illustrated reading unit.

In the above embodiment, information used by each component, such as thresholds, addresses, various settings, etc., may be changed by the user. If changeable, the user may change the information as needed or not. If changeable, it may be realized by a non-illustrated reception unit for receiving change instructions from the user and a non-illustrated change unit for changing the information based on the instructions. Reception of change instructions by the non-illustrated reception unit may be from input devices, received information transmitted via communication lines, or read information from specified storage media.

The present invention is not limited to the above embodiments and comprises various modifications within the scope of the invention.

In the above embodiment, some components or functions may be omitted. Different information from the above information may be used for acquiring information such as information regarding the path, weather forecast information, position prediction information, and fuel consumption information, or some of the above information may not be used.

In the above embodiment, the information acquired by the information processing device 100 to output path information for the target aircraft may be used for other purposes. For example, a providing device may be configured to store information acquired by the information processing device 100 and provide it for the operation of other aircraft or other purposes. This allows the provision of useful information to others. Information such as position prediction information acquired by the other aircraft information acquisition unit 143 and atmospheric forecast information acquired by the weather information acquisition unit 145 may be output to other devices using the providing device.

### [Industrial Applicability]

As described above, the information processing device according to the present invention has the effect of outputting useful information for efficiently flying the aircraft and is useful as an information processing device.

### [Description of Symbols]

100. INFORMATION PROCESSING DEVICE
110. STORAGE UNIT
111. LEARNING INFORMATION STORAGE UNIT
115. AIRCRAFT INFORMATION STORAGE UNIT
117. WEATHER INFORMATION STORAGE UNIT
120. RECEPTION UNIT
130. ACCEPTANCE UNIT
140. PROCESSING UNIT
141. OWN AIRCRAFT INFORMATION ACQUISITION UNIT
142. CONSUMPTION INFORMATION ACQUISITION UNIT
143. OTHER AIRCRAFT INFORMATION ACQUISITION UNIT
144. PATH PREDICTION UNIT
145. WEATHER INFORMATION ACQUISITION UNIT
147. AIRSPACE INFORMATION ACQUISITION UNIT
151. PATH INFORMATION ACQUISITION UNIT
153. CANDIDATE INFORMATION ACQUISITION UNIT
155. PATH EVALUATION UNIT
157. RESULT INFORMATION ACQUISITION UNIT
159. LEARNING INFORMATION GENERATION UNIT
161. OUTPUT UNIT
163. OUTPUT INFORMATION CONFIGURATION UNIT
170. TRANSMISSION UNIT
600. TERMINAL DEVICE
810. TARGET AIRCRAFT
820. RELATED AIRCRAFT
830. OTHER AIRCRAFT
910, 920, 930. INFORMATION SERVER

## Claims

1. An information processing device comprising:
an own aircraft information acquisition unit that acquires condition information regarding the condition of the target aircraft;
an other aircraft information acquisition unit that acquires other aircraft information regarding another aircraft different from the target aircraft;
a path information acquisition unit that acquires information regarding the path of the target aircraft that meets specified conditions based on the condition information and the other aircraft information; and
an output unit that outputs output information based on the information acquired by the path information acquisition unit.

2. The information processing device in accordance with claim 1, wherein the other aircraft information comprises other aircraft acquired information regarding the flight of the aircraft obtained during the flight by the other aircraft.

3. The information processing device in accordance with claim 2, further comprising a weather information acquisition unit that acquires weather information comprising information regarding the atmospheric condition based on forecast information regarding the atmospheric condition in the airspace where the target aircraft is flying and the other aircraft acquired information regarding the airspace, wherein the path information acquisition unit acquires information regarding the path of the target aircraft that meets the specified conditions based on the weather information.

4. The information processing device in accordance with claim 1 or 2, further comprising a weather information acquisition unit that acquires weather information comprising information regarding the atmospheric condition, wherein the path information acquisition unit acquires information regarding the path of the target aircraft that meets the specified conditions based on the weather information.

5. The information processing device in accordance with claim 4, wherein the weather information acquisition unit acquires weather information at different altitudes in the airspace regarding the path of the target aircraft.

6. The information processing device in accordance with any one of claims 1 to 5, wherein the specified conditions comprise at least conditions regarding fuel consumption of the target aircraft or conditions regarding costs associated with the target aircraft.

7. The information processing device in accordance with any one of claims 1 to 6, wherein the specified conditions comprise at least conditions regarding fuel consumption or conditions regarding costs associated with one or more specified related aircraft different from the target aircraft.

8. The information processing device in accordance with any one of claims 1 to 7, further comprising an airspace information acquisition unit that acquires airspace information comprising information regarding the airspace where the aircraft can fly, wherein the path information acquisition unit acquires information regarding the path of the target aircraft using the airspace information.

9. The information processing device in accordance with any one of claims 1 to 8, wherein the other aircraft information comprises information regarding the positions of one or more other aircraft after a specified time has elapsed, and the other aircraft information acquisition unit acquires information regarding the positions of the other aircraft after a specified time has elapsed based on information regarding the positions of the one or more other aircraft.

10. The information processing device in accordance with any one of claims 1 to 9, wherein the own aircraft information acquisition unit acquires the condition information using at least one of scheduled information regarding the flight plan of the target aircraft, aircraft characteristics information indicating the characteristics of the equipment of the target aircraft, or operation history information regarding the operation history of the target aircraft.

11. The information processing device in accordance with any one of claims 1 to 10, wherein the path information acquisition unit acquires information regarding the path of the target aircraft each time specified acquisition conditions are met.

12. The information processing device in accordance with any one of claims 1 to 11, wherein the output unit outputs output information based on the information acquired by the path information acquisition unit each time specified output conditions are met during the flight of the target aircraft.

13. The information processing device in accordance with any one of claims 1 to 12, wherein the output unit outputs the output information in a specified notification mode different from the output mode when the notification conditions are not met when the specified notification conditions regarding the information acquired by the path information acquisition unit are met.

14. The information processing device in accordance with any one of claims 1 to 13, wherein the specified conditions comprise conditions regarding scores, and the path information acquisition unit acquires scores corresponding to each of the two or more candidate paths based on the condition information and the other aircraft information, and acquires information regarding one or more paths based on the acquired scores.

15. The information processing device in accordance with any one of claims 1 to 14, wherein the path information acquisition unit acquires recommended path information as information regarding the path of the target aircraft, including recommended path information regarding heading, altitude, or speed.

16. The information processing device in accordance with claim 15, further comprising a result information acquisition unit that acquires information regarding the operation result of the target aircraft based on the output information when the output information based on the recommended path information is output, wherein the path information acquisition unit acquires information regarding the path of the target aircraft using the information acquired by the result information acquisition unit.

17. The information processing device in accordance with claim 15 or 16, wherein the output unit outputs flight setting information used for flying by the target aircraft in the instrument flight mode based on the recommended path information.

18. The information processing device in accordance with any one of claims 1 to 17, wherein the output unit outputs the output information to a terminal device used by a ground user or an electronic flight bag used by the pilot of the target aircraft.

19. The information processing device in accordance with any one of claims 1 to 18, wherein the information regarding the path comprises at least one of the ascent profile and descent profile that the target aircraft is recommended to pass through.

20. The information processing device in accordance with claim 19, wherein the information regarding the path comprises target altitude information regarding the altitudes of two or more points in the ascent profile or descent profile.

21. An information processing method realized by the own aircraft information acquisition unit, other aircraft information acquisition unit, path information acquisition unit, and output unit, comprising:
an own aircraft information acquisition step in which the own aircraft information acquisition unit acquires condition information regarding the condition of the target aircraft,
an other aircraft information acquisition step in which the other aircraft information acquisition unit acquires other aircraft information regarding another aircraft different from the target aircraft,
a path information acquisition step in which the path information acquisition unit acquires information regarding the path of the target aircraft that meets specified conditions based on the condition information and the other aircraft information, and
an output step in which the output unit outputs output information based on the information acquired by the path information acquisition unit.

22. A program that makes a computer function as:
an own aircraft information acquisition unit that acquires condition information regarding the condition of the target aircraft,
an other aircraft information acquisition unit that acquires other aircraft information regarding another aircraft different from the target aircraft,
a path information acquisition unit that acquires information regarding the path of the target aircraft that meets specified conditions based on the condition information and the other aircraft information, and
an output unit that outputs output information based on the information acquired by the path information acquisition unit.
